# EUROPÄISCHE PATENTSCHRIFT

(11) **EP 1 736 265 B1**
(45) Veröffentlichungstag und Bekanntmachung des Hinweises auf die Patenterteilung: **05.09.2007**
(21) Anmeldenummer: 05013312.3
(22) Anmeldetag: 21.06.2005
(51) Int. Cl.: B23B 31/26

(54) **Spindel mit einer Spannstange und einer Kupplungseinrichtung**
Spindle with a drawbar and a clutch unit
Broche pourvue d'une douille de serrage et d'une unité d'embrayage

(43) Veröffentlichungstag der Anmeldung: 27.12.2006
(73) Patentinhaber: Paul Müller GmbH & Co. KG Unternehmensbeteiligungen, 90411 Nürnberg (DE)
(72) Erfinder: Feldmeier, Fritz, Dr., 90475 Nürnberg (DE)
(74) Vertreter: Lösch, Christoph Ludwig Klaus

(56) Entgegenhaltungen:
- FR-A- 2 543 866
- US-A- 4 175 898
- US-A- 4 583 894
- US-A1- 2004 051 256
- US-B1- 6 234 731

## Beschreibung

Die Erfindung betrifft eine Spindel mit den Merkmalen des Oberbegriffs des Patentanspruchs 1. Eine solche Spindel ist beispielsweise aus US 6 234 731 bekannt.

Der Erfindung liegt die Aufgabe zugrunde, eine Spindel anzubieten, deren Spannstange z.B. zum Werkzeugwechsel ohne separaten Antrieb verschiebbar ist und die, z.B. zum Werkzeugwechsel in eine freiwählbare Winkelposition einsetzbar ist..

Diese Aufgabe wird durch die Merkmale des kennzeichnenden Teils des Patentanspruchs 1 in Verbindung mit den Merkmalen des Oberbegriffs gelöst.

Vorteilhafte Ausführungsformen der Spindel werden in den Unteransprüchen 2-7 beschrieben.

Die Spannstange der erfindungsgemäßen Spindel ist in einer als Hohlwelle ausgebildeten Arbeitswelle der Spindel axial verschiebbar aufgenommen. Die Arbeitswelle ist in einer ersten Kupplungsstellung mit dem Gehäuse freiwählbaren Winkelposition mit dem Gehäuse verbindbar, um eine axiale Verschiebung der Spannstange innerhalb der Arbeitswelle z.B. zum Werkzeugwechsel durchzuführen.

In einer zweiten Kupplungsstellung ist die Antriebswelle gemeinsam mit der Arbeitswelle und der Spannstange zur Rotation des in der Spannzange aufgenommenen Werkzeugs, insbesondere zur Werkstückbearbeitung, verbindbar. Auch dabei ist die Winkelposition der Arbeitswelle zur Antriebswelle frei wählbar. Insgesamt ist die erfindungsgemäße Spindel damit besonders variabel einsetzbar und kann in beliebigen Winkelpositionen der Antriebswelle zur Arbeitswelle sowohl die erste als auch die zweite Kupplungsstellung hergestellt und gelöst werden.

Nach einer vorteilhaften Ausführungsform besitzt die Kupplungseinrichtung in axialer Richtung zueinander verschiebbare Kupplungselemente, die wegbegrenzt axial zueinander verschiebbar sind. Diese Wegbegrenzung kann durch Bereiche mit Außen- und Innenkonus erreicht werden, die wegbegrenzt ineinander einschiebbar sind. Hierdurch wird erreicht, daß die Kupplungseinrichtung sowohl in der ersten als auch in der zweiten Kupplungsstellung eine automatische Endposition erreicht. Eine zusätzliche Begrenzung des axialen Verschiebewegs der Kupplungselemente ist nicht mehr erforderlich.

Eine konkrete Ausgestaltung der Kupplung kann z.B. aus der europäischen Patentanmeldung EP 04 007 914.7, Anmeldetag: 01. April 2004 entnommen werden. Der Inhalt der vorgenannten europäischen Patentanmeldung wird vollständig in den Inhalt der vorliegenden Patentanmeldung aufgenommen, so daß sämtliche dort beschriebenen Ausführungsformen der Kupplungseinrichtung auch bei der vorliegenden erfindungsgemäßen Spindel realisiert werden können.

In einer besonders vorteilhaften Ausführungsform besitzt die Kupplungseinrichtung ein erstes Kupplungselement mit einem Innenkonus, ein zweites Kupplungselement mit einem Außen- und Innenkonus und ein drittes Kupplungselement mit einem Außenkonus.

Auch bei Nichteingriff des dritten Kupplungselements mit dem Außenkonus mit dem zweiten Kupplungselement wirken bei Rotation der Antriebswelle trotz auftretender Fliehkräfte keine unerwünschten Kräfte auf die innen liegenden Klemmkörper des stehenden zweiten Kupplungselements.

Die Erfindung ist anhand eines Ausführungsbeispiels in den Zeichnungsfiguren weiter erläutert. Es zeigen:
- Fig. 1: eine Schnittdarstellung der erfindungsgemäßen Spindel,
- Fig. 2: ein vergrößerter Ausschnitt aus Fig. 1 mit einer geänderten Ausführungsform der Kupplungseinrichtung.

Bei angetriebenen Maschinen oder Maschinenbaugruppen, in denen mehrere Funktionen ausgeführt werden müssen, ist es bislang üblich, jede dieser Funktionen mit einem eigenen Antrieb zu versehen.

Üblich ist, daß die Rotation von einem Elektro-, Hydraulik- oder Pneumatikmotor erzeugt wird und die im allgemeinen axialen und radialen Bewegungsabläufe beim Werkzeug-/Werkstückspannen, - wechseln oder ―verschieben z.B. über Hubzylinder oder pneumatische Antriebe ausgeführt werden.

Die erfindungsgemäße Spindel besitzt einen einzigen Hauptantrieb, der entweder direkt auf der Antriebswelle befestigt ist. Alternativ wird der Antrieb mittels eines Riemenantriebs oder eines Getriebes in die Antriebswelle eingeleitet.

Die Erfindung wird dargestellt an einer Spindel, die ein Werkzeug oder Werkstück in Rotation bringt und gleichzeitig periodisch eine Spann-, Wechsel- oder Verschiebebewegung ausführen kann.

Bei der erfindungsgemäßen Spindel ist die Spindelwelle geteilt und koaxial hintereinander angeordnet, wobei der Trennspalt zwischen beiden Wellenabschnitten gerade so groß ist, daß keine Berührung auftritt.

Der eine Wellenabschnitt, die sogenannte Arbeitswelle 1, hat Einrichtungen zum Halten (Spannen) und Bewegen eines Werkzeugs oder Werkstücks und andere Kolbenabschnitte. Der andere Wellenabschnitt, die sogenannte Antriebswelle 4 ist entweder Bestandteil des Antriebsmotors oder trägt die Antriebselemente, wie Riemenscheibe, Zahnrad o.ä.. Beide Wellenabschnitte können mittels einer Kupplung getrennt oder miteinander verbunden werden, wobei die Kupplung und das gesamte System so ausgelegt ist, daß bei getrennten Wellenabschnitten der Antriebsmotor eine zweite Funktion in der Arbeitswelle 1 erzeugt, d.h. eine lineare Verschiebe- und Spannbewegung.

Die Kupplung kann automatisch geschaltet werden und baut in der vorgeschlagenen Auslegung sehr kurz, so daß das erfindungsgemäße Spindelsystem sehr kompakt und kurz ausführbar ist, wie es sonst nur bei Spindelsystemen mit externer Betätigung des Spannsystems möglich ist.

Spindeln, bei denen alle Funktionen integriert sind, haben in der Regel an dem der Spannstelle für Werkzeug oder Werkstück gegenüberliegenden Ende der Spindeln eine zweite z.B. hydraulische oder pneumatische Antriebsvorrichtung für die Spann-und Verschiebebewegung des Spannkonus 9, die mit ihren Versorgungsleitungen recht austragend sein kann.

Wegen der nicht nötigen zweiten Antriebsvorrichtung kann bei der erfindungsgemäßen Antriebsvorrichtung erheblich an Gewicht gespart werden, was bei schnellen Bewegungen und Beschleunigungen vorteilhaft ist. Eingespart werden kann auch die Versorgungs- und Steuerungseinrichtungen für die zweite Antriebsvorrichtung.

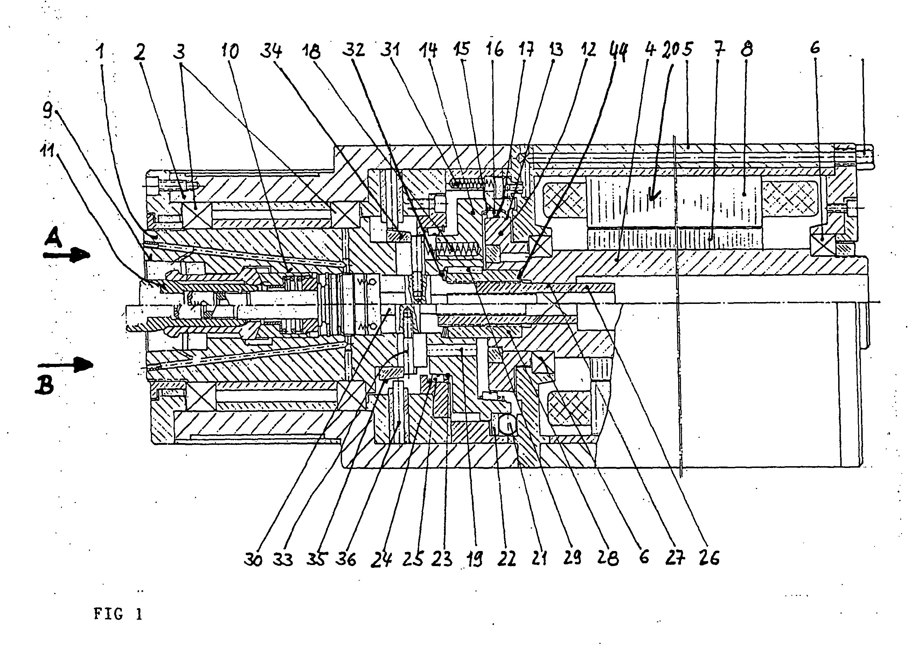

Fig. 1 zeigt eine Werkzeugmaschinenspindel zum Fräsen und Schleifen mit automatischem Werkzeugwechselsystem.

Zwischen Arbeitswelle 1 und getrennter Antriebswelle 4 ist eine Kupplung vorgesehen, mit einem Gewindesystem zur Erzeugung der linearen Axialbewegung und der Spannzange 11 und einem Überwachungssystem für die Spann- und Verschiebebewegung. Die Kupplung mit Betätigung hat kurze Schaltwege, kann in jeder Drehstellung ruckfrei greifen und ist mit relativ geringen Kräften zu betätigen, um von der Antriebswelle 4 auf die Arbeitswelle 1 zu übertragen.

Das Gewindesystem (Gewindeeinrichtung) in der Stoßstelle der beiden Wellenabschnitte kann je nach Auslegung der Steigerungen in den Differenzgewinden eine zusätzliche Kraftübersetzung vom Drehmoment des Antriebsmotors zur Zugkraft in der Spannstange erzeugen.

In Fig. 1 ist der Zustand "Spannzeug geschlossen bzw. gespannt" oberhalb der Mittellinie mit A gekennzeichnet und der Zustand "Spannzeug geöffnet" unterhalb der Mittellinie mit B dargestellt.

Die Spindel besteht aus einem Spindelkopf mit der Arbeitswelle 1 und im Spannkonus 9 aufgenommener Spannzange 11, wobei die Arbeitswelle 1 im Gehäuse 2 mittels Lager 3 drehbar gelagert ist. Die Antriebswelle 4 ist im Gehäuse 5 mittels des Lagers 6 unabhängig von der Antriebswelle 1 drehbar gelagert. Der Antrieb ist in Fig. 1 beispielhaft ein Elektromotor 20, bestehend aus dem Rotor 7, der auf der Antriebswelle 4 befestigt ist und dem Stator 8, der im Gehäuse 5 aufgenommen ist. Der Antrieb könnte auch ein Luft- oder Hydraulikmotor oder eine Riemenscheibe oder ein Getriebe mit externem Antriebsmotor sein.

Die Arbeitswelle 1 hat am äußeren Ende eine zentrische Öffnung, bestehend aus dem Spannkonus 9 und der zylindrischen Zentrierbohrung 10, in der die Spannzange 11 steckt. Alternativ zur dargestellten HSK-Spannzange 11 kann auch eine Spannzange oder ein Spannsystem mit Spannfingern oder ein am Spindelende befestigtes Mehrbackenfutter verwendet werden.

Der Spindelzustand A zeigt die in die Arbeitswelle 1 hineingezogene Spannzange 11, das ist die Stellung "Werkzeug gespannt". Beim Spindelzustand B ist die Spannzange 11 aus dem Spannkonus 9 herausgeschoben und der Spanneinsatz mit Werkzeug kann aus dem Spannkonus entnommen werden. Der HSK-Spanneinsatz DIN 69893-1 ist nicht dargestellt. Bei einer geschlitzten Spannzange kann diese radial aufspreizen und das Werkzeug entnommen werden. In Stellung B kann das Werkzeug entnommen und ein anderes eingesetzt werden.

Der obere Spindelquerschnitt A zeigt das Spindelsystem im Betriebszustand, d.h. "Werkzeug gespannt" und Arbeitswelle 1 ist mit Antriebswelle 4 drehfest verbunden.

Die Verbindung beider Wellen wird mit der schaltbaren Kupplungseinrichtung hergestellt. Diese besteht aus dem Kupplungsflansch 12 (drittes Kupplungselement) mit der konischen Außenfläche 13 (Außenkonus), der verdreh- und ortsfest mit der Antriebswelle 4 verbunden ist. Der Kupplungsring 14 (zweites Kupplungselement) besitzt einen parallel zur konischen Außenfläche 13 verlaufenden Innenkonus 15 und zwischen den beiden Konusflächen einen Kranz von Klemmkörpern 16, die in einen Käfigring gehalten werden und mittels einer umlaufenden Feder 17 gegen den Innenkonus 15 gedrückt werden (s. Anmeldung EP 04 007914.7).

Bei einer Kupplung dieser Art, die in der EP 04 007 914.7 beschrieben ist, sind die Klemmkörper paarweise gegeneinander wirkend angeordnet, so daß eine spielfreie Klemmung in beiden Drehrichtungen gegeben ist.

Wird der Kupplungsring 14 nach rechts verschoben, dann kommen Außenkonus 13, Innenkonus 15 und Klemmkörper 16 in Kontakt (also zweites und drittes Kupplungselement) und bilden eine drehfeste Verbindung.

Die axiale Bewegung des Kupplungsrings 14 nach rechts wird durch die Druckfedern 18 bewirkt und aufrechterhalten. Der Kupplungsring 14 ist über eine axial verschiebbare, aber in drehfester Verbindung, z.B. eine formschlüssige Wellen-/Narbenverbindung 19, mit der Arbeitswelle 1 verbunden.

Die Situation beim Werkzeugwechsel ist im Spindelquerschnitt B dargestellt. Zunächst wird der Antriebsmotor 20 gestoppt und über den Anschluß 35 Druckluft in das Kolbensystem geleitet. Der Kolben ist hier beispielhaft ein Schlauchring 21 aus sehr dehnbarem Material, der durch Druckluft aufgeblasen wird und den Druckring 22 und damit den Kupplungsring 14 nach links (gegen Pfeilrichtung A) verschiebt. Der Kolben in Form des ringförmigen Schlauchs ist nur eine recht kleinbauende Möglichkeit. Es kann auch ein Fluid- oder druckluftbeaufschlagtes Kolben-/Zylindersystem bekannter Bauart oder ein lineares oder drehendes System mit Magnetkraft verwendet werden.

Durch die relative Axialverschiebung von Innenkonus 15 zu Außenkonus 13 entsteht ein radialer Spalt, der die Klemmkörper 16 außer Kontakt mit dem Außenkonus 13 bringt. Damit ist die Drehverbindung von Antriebswelle 4 mit Arbeitswelle 1 unterbrochen.

Der Kupplungsring 14 wird soweit nach links verschoben, bis der Außenkonus 23 am anderen Ende des Kupplungsrings 14 mit dem Innenkonus 24, der mit dem Gehäuse 2 fest verbunden ist, über den Klemmkörperkranz 25 (erstes Kupplungselement) in Kontakt kommt.

Damit ist ein verdrehfester Kontakt zwischen Kupplungsring 14 und damit Arbeitswelle 1 und Gehäuse 2 hergestellt, während die Drehverbindung von Antriebswelle 4 zu Arbeitswelle 1 unterbrochen ist.

Wird jetzt der Antrieb (z.B. Antriebsmotor 20) eingeschaltet, dann dreht sich die Antriebswelle 4 relativ zur stillstehenden Arbeitswelle 1 und somit kann sich die Gewindewelle 26, die in Abschnitt 27 axial verschieblich über ein Sechskantprofil mit der Antriebswelle 4 drehfest verbunden ist, in die Gewindebuchse 28, die ihrerseits axial verschiebbar mittels des Schiebekeils 29 drehfest mit der Arbeitswelle 1 verbunden ist, hinein- bzw. herausschrauben.

Die Gewindewelle 26 hat in ihrem linken Abschnitt ein Außen- und Innengewinde mit unterschiedlichen Steigungen. Das Außengewinde wirkt mit dem Innengewinde der Gewindebuchse 28 zusammen und das Innengewinde der Gewindewelle 26 ist im Eingriff mit dem Gewinde auf der Spannstange 30. Durch geeignete Wahl der unterschiedlichen Gewindesteigungen kann die Axialbewegung der Spannstange 30 so festgelegt werden, daß bei ausreichender Tragfähigkeit der Gewinde die erforderliche Kraftübersetzung zwischen Drehmoment des Antriebsmotors und Spannzangen-Einzugskraft erreicht wird.

Dieses Spannsystem ist ein im Kraftverlauf in sich geschlossenes System, dies bedeutet, daß nach außen von der Arbeitswelle 1 keinerlei Kräfte wirken, da die Steigungen der Gewinde selbsthemmend sind. Durch das Spannen des Werkzeugs werden weder die Lager 3 belastet noch ist eine äußere Abstützkraft nötig. Die Axialkraft der Spannstange 30 wird von der Gewindebuchse 28 aufgenommen und über die Druckfedern 32 in die Arbeitswelle 1 geleitet. Die Druckfedern 32 werden dabei unter Vorspannung um einige zehntel Millimeter zusammengedrückt. Dies reicht aus, um ein eventuelles Setzen der Spannzange oder des Werkzeugs durch Stöße oder Vibration während des Arbeitszyklus und damit einen Spannkraftverlust auszugleichen.

Beim Werkzeugwechsel, d.h. im Spindelquerschnitt B nach Abb. 1, drückt die Druckfeder 32 die Gewindebuchse 28 gegen die Plananlage 44 an der Antriebswelle 4. Hier stützt sich auch die zum Herausschieben der Spannzange 11 aus der Arbeitswelle 1 notwendige Axialkraft ab.

### Der Werkstückwechsel läuft somit in folgender Reihenfolge ab:

Der Antriebsmotor 20 stoppt, dann Aktivieren des Kolbens 22 bis Kupplung 23, 24 schließt; Einschalten des Elektromotors in die Drehrichtung, so daß Spannstange 30 und Spannzange 11 aus der Arbeitswelle 1 herausgeschoben wird. Dann wird der Elektromotor gestoppt und das Werkzeug in der Spannzange 11 ausgewechselt. Dann starten des Elektromotors mit entgegengesetzter Drehrichtung, so daß Spannzange 11 eingezogen und Werkzeug gespannt wird. Dann wird die Druckluft für den Kolbenhub abgeschaltet. Der Kupplungsring 14 wird mit Federkraft 18 verschoben, bis sich die Kupplung 23, 24 öffnet und sich die Kupplung 13, 15 schließt.

Darüber hinaus wird der Kolbenring 22 von den Federn 31 weitergeschoben, so daß sich der rotierende Kupplungsring 14 nicht mehr mit dem stillstehenden Kolbenring 22 berührt. Jetzt wird der Elektromotor mit Arbeitsdrehrichtung gestartet und der Arbeitszyklus beginnt.

Der Werkstückwechselzyklus bzw. das Öffnen und Spannen der Spannstange 11 wird überwacht. Dazu wird die Spannstangenbewegung über Mitnehmerbolzen 33 auf einen Kontrollring 34, der axial verschlieblich auf der Arbeitswelle 1 geführt ist, übertragen. Dieser Kontrollring 34 ist außen konisch und wird an einem Sensor 36 vorbeibewegt und erzeugt dabei ein analoges Signal. Dieses Signal bildet die axiale Stellung der Spannstange 11 ab und gibt Auskunft, ob die jeweilige Endlage der Spannstange 11 erreicht ist und schaltet die Maschine ab, falls die Werkzeugspannbewegung nicht zu Ende geführt wurde. Dies bedeutet, daß das Werkzeug nicht richtig gespannt ist oder - falls die Spannstange über den Endpunkt hinausführt -, daß kein Werkzeug im Spannsystem sich befindet. Ebenso überwacht es den Ausstoßvorgang des Werkzeugs.

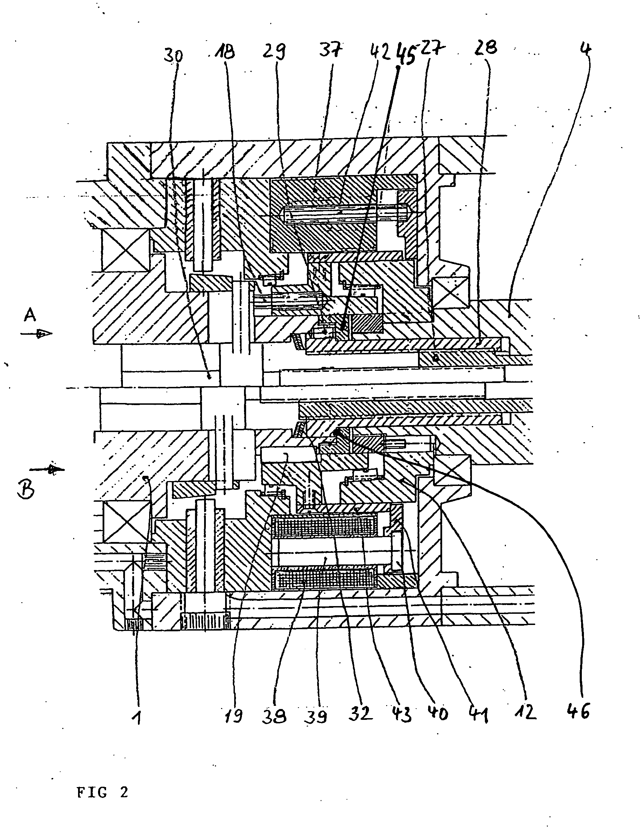

Fig. 2 zeigt eine weitere Möglichkeit, die Kupplung zu betätigen. Es sind gleichmäßig am Umfang verteilte Elektromagnete in einem Trägerring 37 befestigt. Die einzelnen Magnete bestehen aus der Magnetspule 38 und dem axial beweglichen Magnetkern 39, der aus magnetisierbarem Stahl besteht. Die Magnetkerne 39 sind mit ihrem Bund 40 am freien Magnetkernende in den Schaltring 41 eingehängt und werden in dem äußersten rechten Lager mittels den Federn 42 gehalten, die sich im Trägerring 37 abstützen.

Damit wird erreicht, daß während des Arbeitszyklus der Spindel keine Berührung zwischen dem stillstehenden Schaltring 41 und der rotierenden Schaltbuchse 43, die fest mit dem Kupplungsring 14 verbunden ist, besteht.

Zum Öffnen des Spannsystems wird die Magnetspule 38 mit Strom beaufschlagt und zieht den Magnetkern 39 in die Magnetspule 39. Über dem Bund 40, der den Schaltring 41 mitzieht, wird der Kupplungsring 14 von der Schaltbuchse 43 in seine linke Endlage, d.h. bis die Kupplung 23, 24 schließt, gezogen.

Nach Abschalten des Stroms für die Magnetspule 38 wird der Kupplungsring 14 durch die Federkraft 18 wieder in Arbeitsstellung gebracht und die Federkraft 42 sorgt für die Trennung von Schaltring 41 und Schaltbuchse 43. Anstelle der einzelnen Elektromagnete könnten kleine Hydraulik- oder Luftzylinder vorgesehen werden, wobei das freie Ende der Kolbenstange ebenfalls ein Bund 40 aufweist, so daß die weitere Funktion genau der oben beschriebenen entspricht, wobei sich die Axialkraft in der Spannstange 30 zum Herausschieben der Spannzange 11 in der Arbeitswelle 1 abstützt. Die abgesetzte Gewindebuchse 28 wird durch die auf der Arbeitswelle 1 befestigte Ringmutter 45 gegen die Druckfeder 32 in ihrer axialen Position gehalten. Der Absatz der Gewindebuchse 28 drückt auf die Ringmutter 45 an der mit 46 gekennzeichneten Stelle. Diese Ausführung hat den Vorteil, daß auch während des Werkzeugwechsels nach außen von der Arbeitswelle 1 keinerlei Kräfte wirken.

### BEZUGSZEICHEN

- 1: Arbeitswelle
- 2: Gehäuse
- 3: Lager
- 4: Antriebswelle
- 5: Gehäuse
- 6: Lager
- 7: Rotor
- 8: Stator
- 9: Spannkonus
- 10: Zentrierbohrung
- 11: Spannzange
- 12: Kupplungsflansch
- 13: Außenfläche
- 14: Kupplungsring
- 15: Innenkonus
- 16: Klemmkörper
- 17: Feder
- 18: Druckfeder
- 19: Wellen-/Narbenverbindung
- 20: Antriebsmotor
- 21: Schlauchring
- 22: Druckring
- 23: Außenkonus
- 24: Innenkonus
- 25: Klemmkörperkranz
- 26: Gewindewelle
- 27: Abschnitt
- 28: Gewindebuchse
- 29: Schiebekeil
- 30: Spannstange
- 31: Feder
- 32: Druckfeder
- 33: Mitnehmerbolzen
- 34: Kontrollring
- 35: Druckluftanschluß
- 36: Sensor
- 37: Trägerring
- 38: Magnetspule
- 39: Magnetkern
- 40: Bund
- 41: Schaltring
- 42: Feder
- 43: Schaltbuchse
- 44: Plananlage
- 45: Ringmutter
- 46: Stelle

## Patentansprüche

1. Spindel, insbesondere Maschinenspindel, zur Bearbeitung eines Werkstücks durch ein an der Spindel angebrachtes Werkzeug, mit einer axial verschiebbaren Spannstange (30) zur Befestigung des Werkzeugs an der Spindel und einer insbesondere durch den Motor (20) der Spindel angetriebenen Antriebswelle (4), wobei die Antriebswelle (4) der Spindel über eine Kupplungeinrichtung (12, 14, 25) entweder mit der Spannstange (30) zur axialen Verschiebung der Spannstange (30) zum Werkzeugwechsel oder mit dem Werkzeug zur Bearbeitung des Werkstücks verbindbar ist.
**dadurch gekennzeichnet, daß**
- die Spannstange (30) in einer als Hohlwelle ausgebildeten Arbeitswelle (1) axial verschiebbar aufgenommen ist,
- die Arbeitswelle (1) gegenüber dem Gehäuse (2) der Spindel in einer ersten Kupplungsstellung arretierbar ist, wobei die Spannstange (30) durch die Antriebswelle (4) innerhalb der Arbeitswelle (1) axial verschiebbar ist, und Winkelposition der Arbeitswelle (1) und der Antriebswelle (4) in der ersten Kupplungsstellung frei wählbar ist und
- in einer zweiten Kupplungsstellung ein gemeinsamer Antrieb der Arbeitswelle (1) und der Spannstange (30) durch die Antriebswelle (4) herstellbar ist, wobei die Winkelposition der Arbeitswelle (1) und der Antriebswelle (4) in der zweiten Kupplungsstellung frei wählbar ist.

2. Spindel nach Anspruch 1,
**dadurch gekennzeichnet, daß** die Kupplungseinrichtung (12, 14, 25) in axialer Richtung zueinander verschiebbare Kupplungselemente (12, 14, 25) aufweist, wobei die Kupplungselemente (12, 14, 25) wegbegrenzt axial zueinander verschiebbar sind.

3. Spindel nach Anspruch 2,
**dadurch gekennzeichnet, daß** die Kupplungseinrichtung ein erstes Kupplungselement (25) mit einem Innenkonus (24), ein zweites Kupplungselement (14) mit einem Außen- (23) und Innenkonus (15) und ein drittes Kupplungselement (12) mit einem Außenkonus (13) aufweist.

4. Spindel nach Anspruch 2 oder 3,
**dadurch gekennzeichnet, daß** die Kupplungseinrichtung in zwei Richtungen axial verschiebbar ist, wobei in beiden Richtungen eine Wegbegrenzung der axialen Verschiebung erfolgt.

5. Spindel nach einem der vorhergehenden Ansprüche,
**dadurch gekennzeichnet, daß** zwischen der Antriebswelle (4) der Spindel und der Spannstange (30) zur axialen Verschiebung der Spannstange (30) innerhalb der Antriebswelle (4) in der ersten Kupplungsstellung eine Gewindeeinrichtung vorgesehen ist.

6. Spindel nach Anspruch 5,
**dadurch gekennzeichnet, daß** die Gewindeeinrichtung ein Differenzgewinde mit mindestens zwei ineinandergreifenden Gewindehülsen aufweist.

7. Spindel nach einem der vorhergehenden Ansprüche,
**dadurch gekennzeichnet, daß** die Kupplungseinrichtung ein Kupplungselement aufweist, welches drehfest und in axialer Richtung verschiebbar auf der Gewindeeinrichtung angebracht ist.

## Claims

1. Spindle, in particular a machine spindle, for machining a workpiece by means of a tool attached to the spindle, comprising an axially displaceable drawbar (30) for fastening the tool to the spindle and a drive shaft (4) driven in particular by the motor (20) of the spindle, wherein the drive shaft (4) of the spindle can be connected via a clutch unit (12, 14, 25) either to the drawbar (30) for axially displacing the drawbar (30) for the tool change or to the tool for machining the workpiece,
**characterized in that**
- the drawbar (30) is accommodated in an axially displaceable manner in a work shaft (1) designed as a hollow shaft,
- the work shaft (1) can be locked relative to the housing (2) of the spindle in a first clutch position, the drawbar (30) being axially displaceable inside the work shaft (1) by the drive shaft (4), and the angular position of the work shaft (1) and of the drive shaft (4) in the first clutch position is freely selectable, and
- in a second clutch position, a joint drive of the work shaft (1) and of the drawbar (30) can be produced by the drive shaft (4), the angular position of the work shaft (1) and of the drive shaft (4) in the second clutch position being freely selectable.

2. Spindle according to Claim 1, **characterized in that** the clutch unit (12, 14, 25) has clutch elements (12, 14, 25) which are displaceable relative to one another in the axial direction, the clutch elements (12, 14, 25) being axially displaceable relative to one another to a limited extent.

3. Spindle according to Claim 2, **characterized in that** the clutch unit has a first clutch element (25) with an internal taper (24), a second clutch element (14) with an external taper (23) and an internal taper (15), and a third clutch element (12) with an external taper (13).

4. Spindle according to Claim 2 or 3, **characterized in that** the clutch unit is axially displaceable in two directions, the axial displacement being limited in both directions.

5. Spindle according to one of the preceding claims, **characterized in that** a threaded device is provided between the drive shaft (4) of the spindle and the drawbar (30) for the axial displacement of the drawbar (30) inside the drive shaft (4) in the first clutch position.

6. Spindle according to Claim 5, **characterized in that** the threaded device has a differential thread having at least two threaded sleeves engaging one inside the other.

7. Spindle according to one of the preceding claims, **characterized in that** the clutch unit has a clutch element which is attached to the threaded device in a rotationally locked and axially displaceable manner.

## Revendications

1. Broche, en particulier broche de machine, pour l'usinage d'une pièce avec un outil monté sur la broche, comprenant une barre de serrage (30) pouvant coulisser axialement pour fixer l'outil sur la broche, et un arbre d'entraînement (4) entraîné en particulier par le moteur (20) de la broche, l'arbre d'entraînement (4) de la broche pouvant être connecté par le biais d'un dispositif d'accouplement (12, 14, 25) soit à la barre de serrage (30) pour le coulissement axial de la barre de serrage (30) en vue de changer d'outil, soit à l'outil en vue d'usiner la pièce,
**caractérisée en ce que**
- la barre de serrage (30) est reçue de manière à pouvoir coulisser axialement dans un arbre de travail (1) réalisé sous forme d'arbre creux,
- l'arbre de travail (1) peut être bloqué par rapport au boîtier (2) de la broche dans une première position d'accouplement, la barre de serrage (30) pouvant coulisser axialement par le biais de l'arbre d'entraînement (4) à l'intérieur de l'arbre de travail (1), et la position angulaire de l'arbre de travail (1) et de l'arbre d'entraînement (4) pouvant être choisie librement dans la première position d'accouplement, et
- dans une deuxième position d'accouplement, un entraînement commun de l'arbre de travail (1) et de la barre de serrage (30) pouvant être produit par l'arbre d'entraînement (4), la position angulaire de l'arbre de travail (1) et de l'arbre d'entraînement (4) pouvant être choisie librement dans la deuxième position d'accouplement.

2. Broche selon la revendication 1,
**caractérisée en ce que** le dispositif d'accouplement (12, 14, 25) présente des éléments d'accouplement (12, 14, 25) pouvant coulisser les uns par rapport aux autres dans la direction axiale, les éléments d'accouplement (12, 14, 25) pouvant coulisser avec une course limitée axialement les uns par rapport aux autres.

3. Broche selon la revendication 2,
**caractérisée en ce que** le dispositif d'accouplement présente un premier élément d'accouplement (25) avec un cône interne (24), un deuxième élément d'accouplement (14) avec un cône externe (23) et un cône interne (15), et un troisième élément d'accouplement (12) avec un cône externe (13).

4. Broche selon la revendication 2 ou 3,
**caractérisée en ce que**
le dispositif d'accouplement peut coulisser axialement dans deux directions, une limitation de course du coulissement axial se produisant dans les deux directions.

5. Broche selon l'une quelconque des revendications précédentes,
**caractérisée en ce qu'**entre l'arbre d'entraînement (4) de la broche et la barre de serrage (30) est prévu un dispositif fileté pour le coulissement axial de la barre de serrage (30) à l'intérieur de l'arbre d'entraînement (4) dans la première position d'accouplement.

6. Broche selon la revendication 5,
**caractérisée en ce que** le dispositif fileté présente un filetage différentiel avec au moins deux gaines filetées venant en prise l'une dans l'autre.

7. Broche selon l'une quelconque des revendications précédentes,
**caractérisée en ce que**
le dispositif d'accouplement présente un élément d'accouplement qui est monté sur le dispositif fileté de manière fixe en rotation et de manière à pouvoir coulisser dans la direction axiale.
